# EUROPÄISCHE PATENTSCHRIFT

(11) **EP 3 729 232 B1**
(45) Veröffentlichungstag und Bekanntmachung des Hinweises auf die Patenterteilung: **03.11.2021**
(21) Anmeldenummer: 18825623.4
(22) Anmeldetag: 13.12.2018
(51) Int. Cl.: G06F 1/16, H04M 1/04, H04M 1/22, G03B 15/02, H04M 1/02

(54) **BISTABILE LEUCHTE**
BISTABLE LUMINAIRE
LAMPE BISTABLE

(30) Priorität: 22.12.2017 DE 102017131243
(43) Veröffentlichungstag der Anmeldung: 28.10.2020
(73) Patentinhaber: AIFC-U Unternehmensförderung, 14469 Potsdam (DE)
(72) Erfinder: BÖSNECKER, Robert, 84030 Ergolding (DE)
(74) Vertreter: Hofstetter, Schurack & Partner
(86) Internationale Anmeldenummer: PCT/EP2018/084794
(87) Internationale Veröffentlichungsnummer: WO 2019/121334

(56) Entgegenhaltungen:
- WO-A1-2015/139039
- DE-A1-102016 200 100
- FR-A1- 2 954 247
- US-A1- 2015 009 672
- US-B1- 7 347 019
- US-B1- 8 967 376

## Beschreibung

Die vorliegende Erfindung betrifft eine Beleuchtungsvorrichtung für ein Mobilgerät mit einem Leuchtelement und einem Halteelement. Darüber hinaus betrifft die vorliegende Erfindung eine Geräteanordnung mit einem Mobilgerät und einer derartigen Beleuchtungsvorrichtung.

Smartphones, Tablets oder Laptops haben heute ein typisches Aussehen, allerdings sind ihre Abmessungen nicht gleich. Folglich gibt es für jedes Smartphone eigenes Zubehör, das diese mechanischen Abmessungen berücksichtigt, z.B. Handy- oder Tablethüllen, Laptop-Cases und so weiter.

Vielfach besteht der Bedarf, mit einem Mobilgerät, insbesondere einem Smartphone oder Tablet, auch bei schlechteren Beleuchtungsverhältnissen Fotografien oder Videoaufnahmen zu erstellen. Dazu kann der integrierte Blitz in dem Mobilgerät eine Hilfe sein. Die Ausleuchtung mithilfe eines Blitzes, der meist eine punktförmige Lichtquelle darstellt, ist in der Regel mangelhaft und stellt nur eine Nothilfe dar. Eine qualitativ hochwertige Ausleuchtung würde zu wesentlich besseren Aufnahmen führen.

Aus der Werbung sind ringförmige Leuchtelemente bekannt, die insbesondere zur Aufnahme von sogenannten Selfies angepriesen werden. Diese Leuchten werden auf ein Smartphone aufgesteckt und besitzen in der Regel eine Reichweite von maximal zwei Metern. Sie sind allerdings verhältnismäßig unhandlich und klobig.

Eine etwas handlichere Variante der Ring-Lichter ist mit klammerartigen Befestigungen ausgestattet, die auf das Smartphone aufstreckbar sind. Allerdings verdecken derartige Ring-Lichter häufig einen Teil des Bildschirms des Smartphones, wenn etwa die Hälfte des Ring-Lichts über das Smartphone gesteckt wird.

Weiterhin sind auch andere Ansätze bekannt, um eine gleichmäßige Ausleuchtung beispielsweise des Gesichts des Smartphone-Benutzers zu erreichen. So stehen beispielsweise leuchtende Handy-Hüllen zur Verfügung, die LED-Streifen an ihren Kanten verwenden, um eine gleichmäßige Ausleuchtung zu erzielen. Nachteilig ist jedoch, dass eine Hülle nur zu einem einzigen Smartphone-Typ passt. Sobald dieses Smartphone veraltet ist und sich der Benutzer ein neues Smartphone kauft, muss er sich auch eine neue Licht-Hülle kaufen. Er kann die alte Licht-Hülle nicht mehr verwenden. In weiteren Ausgestaltungen besitzen die leuchtenden Hüllen zusätzlich Akkus.

Unabhängig von mobilen Geräten sind Schnappband-Lichtarmbänder bekannt. Sie bestehen aus einem bistabilen Metallband, das mit einer flexiblen Platine ausgerüstet ist. Auf der Platine befinden sich in der Regel zwei oder mehr Leuchtdioden. Im Verschluss des Armbands können Batterien untergebracht sein. Hierzu wird auch auf die Druckschrift CN 202 510 994 U hingewiesen.

Darüber hinaus offenbart die Druckschrift US 2016/0345695 A1 einen bistabilen Federständer und ein Gehäuse für ein tragbares Mobilgerät. Eine plattenförmige Feder ragt im Wesentlichen senkrecht aus der Rückwand des Mobilgeräts, insbesondere Smartphones, und bildet so eine rückwärtige Stütze, sodass das Mobilgerät aufrecht hingestellt werden kann.

Ferner beschreibt die Druckschrift US 2016/0290624 Á1 ein Schnappband, das Licht aussenden kann. Eine bistabile Feder ist unter anderem mit einem Lichtleiterelement beschichtet. Ebenso ist eine Lichtquelle in den Schichtaufbau integriert.

Außerdem offenbart die Druckschrift US 2015/0177455 A1 eine Beleuchtungsvorrichtung mit einer bistabilen Feder. Am Rande der bistabilen Feder sind Leuchtelemente angeordnet, die sich im aufgerollten Zustand der bistabilen Feder ebenfalls mit aufrollen.

Das Wort bistabil dient in der Systemtheorie zur Beschreibung von Gleichgewichten eines dynamischen Systems. Demnach ist ein bistabiles Gleichgewicht eine Sonderform eines metastabilen Gleichgewichts. Ein metastabiles System geht nach einer ausreichend großen Störung in einen stabileren Gleichgewichtszustand über. Bei zwei Gleichgewichtszuständen spricht man auch von bistabil. Ein bistabiles System nimmt also zwei stabile Zustände ein. Alle anderen Zustände sind instabil bzw. labil.

Mit anderen Worten ist Bistabilität die Eigenschaft einiger Systeme, zwei mögliche stabile Zustände einnehmen zu können, aber nur durch einen äußeren Impuls von einem in den anderen Zustand zu wechseln. Es sind also nur zwei stabile Zustände möglich. Bistabiles Verhalten wird meist durch eine positive Rückkopplung hervorgebracht. Jeder der Zustände stabilisiert sich dadurch selbst. Ein wesentlicher Punkt der Bistabilität ist somit ferner, dass sich die Zustände selbst stabilisieren und das System also selbst ohne äußeren Einfluss aus einem labilen oder instabilen Zustand in einen von den beiden stabilen Zuständen wechselt.

Als bistabile Systeme sind beispielsweise bistabile Relais bekannt, die in einem stromlosen Zustand genau zwei unterschiedliche, stabile Schaltzustände einnehmen können. Während Standard-Relais im angezogenen Zustand ständig Energie zugeführt werden muss, um den Schaltzustand zu halten, benötigen bistabile Relais nur kurz Energie zum Wechseln des Schaltzustandes.

Ein weiteres bistabiles System wäre beispielsweise eine Feder mit zwei stabilen Gleichgewichtszuständen gemäß den Dokumenten DE 69 0 118 90 T2 oder GB-A-1 429 631. Diese Feder kann zur Steuerung beim wechselseitigen Positionieren von beweglichen, miteinander zusammenwirkenden Teilen und zur Speicherung von elastischer Formänderungsenergie eingesetzt werden.

Ferner beschreibt Druckschrift US 2013/0044215 A1 eine bistabile Feder mit flexiblem Display entsprechend einem Schnappband. Das bistabile Schnappband dient als Grundlage für eine Armbanduhr.

Die DE 10 2016 200 100 A1 offenbart ein variables Haltesystem mit einem Gehäuse, das eine erste Gehäuseschale und eine zweite Gehäuseschale aufweist, wobei die erste Gehäuseschale räumlich fixierbar ist und die zweite Gehäuseschale, die zumindest einen translatorischen Freiheitsgrad aufweist, zur Aufnahme des zumindest einen mobilen Endgerätes aus einer Grundstellung in eine Aufnahmestellung bewegt werden kann, wodurch ein Abstand zwischen den beiden Gehäuseschalen in einer Bewegungsrichtung vergrößert wird und dadurch das zumindest eine mobile Endgerät in dem Haltesystem durch eine Rückstellkraft aufnehmbar und fixierbar ist, wobei die beiden Gehäuseschalen durch eine einziehbare, insbesondere aufrollbare Stützwand miteinander verbunden sind, die in der Grundstellung in einer der beiden Gehäuseschalen zumindest teilweise aufgenommen ist, und die durch die Bewegung der zweiten Gehäuseschale in die Aufnahmestellung ausbringbar ist.

Druckschrift US 7 347 019 B1 beschreibt eine Vorrichtung mit integrierter bistabiler Bandfeder. Die Vorrichtung dient zum Versteifen eines flexiblen Artikels und besitzt Klemmelemente, um den flexiblen Artikel einzuspannen.

Ferner offenbart Druckschrift US 8 967 376 ein Accessoire für eine Anzeigevorrichtung. Es besitzt ein Beleuchtungselement, das teleskopartig ausgezogen werden kann.

Die Aufgabe der vorliegenden Erfindung besteht darin, eine Beleuchtungsvorrichtung für ein Mobilgerät vorzuschlagen, die universell einsetzbar ist und kleine Abmessungen besitzt. Darüber hinaus soll eine entsprechende Geräteanordnung mit einem Mobilgerät und einer solchen Beleuchtungsvorrichtung angegeben werden.

Erfindungsgemäß wird diese Aufgabe durch eine Beleuchtungsvorrichtung nach Anspruch 1 gelöst. Ferner wird eine Geräteanordnung nach Anspruch 11 bereitgestellt. Vorteilhaft Weiterbildungen der Erfindung ergeben sich aus den Unteransprüchen.

Demnach wird entsprechend der vorliegenden Erfindung eine Beleuchtungsvorrichtung für ein Mobilgerät, insbesondere ein Smartphone, oder ein anderes Objekt bereitgestellt, das ein Leuchtelement und ein Halteelement aufweist. Nachfolgend wird stellvertretend für ein beliebiges Objekt immer auf ein Mobilgerät Bezug genommen. Die Beleuchtungsvorrichtung sollte in der Lage sein, zumindest einen Radius von 1 Meter im Umkreis auszuleuchten. Somit könnten Aufnahmeobjekte in diesem Umkreis ausreichend für Fotoaufnahmen oder Videoaufnahmen ausgeleuchtet werden. Die Beleuchtungsvorrichtung besitzt mindestens ein Leuchtelement und ein Halteelement. Das mindestens eine Leuchtelement besitzt vorzugsweise eine oder mehrere LEDs, die mit wenig Energie betrieben werden können. Das Halteelement dient dazu, die Beleuchtungsvorrichtung und insbesondere das Leuchtelement an dem Mobilgerät zu halten. Dazu ist es vorteilhaft, wenn das Leuchtelement entsprechend an dem Halteelement befestigt ist.

Das Leuchtelement ist an einem ersten Endabschnitt eines ersten bistabilen Elements (z.B. Band, Folie, Tuch etc.) und das Halteelement an einem dem ersten gegenüberliegenden zweiten Endabschnitt des ersten bistabilen Elements befestigt. Dies bedeutet, dass das Leuchtelement und das Halteelement mittels des bistabilen Elements verbunden sind. Speziell sind Leuchtelement und Halteelement an den gegenüberliegenden Endabschnitten des bistabilen Elements angebracht. Dabei wird unter "Endabschnitt" insbesondere ein Abschnitt verstanden, der bis zum jeweiligen Ende des Elements reicht und vorzugsweise eine Länge von bis zu 20 Prozent der Gesamtlänge des Elements besitzt.

Das erste bistabile Element ist in einem ersten stabilen Zustand ausgerollt, sodass das Leuchtmittel von dem Halteelement maximal beabstandet ist. In dem ersten stabilen Zustand ist das bistabile Element also annähernd gerade und das Leuchtelement sowie das Halteelement werden in diesem stabilen Zustand in größtmöglicher Entfernung voneinander stabil gehalten.

Da das Band bistabil ist, kann es einen zweiten stabilen Zustand einnehmen. In diesem zweiten stabilen Zustand ist es (ohne äußere Krafteinwirkung) durch Eigenkraft (vollständig) zusammengerollt. Dies bedeutet, dass das Element einen definierten zweiten Zustand einnehmen kann, der durch den Fertigungsprozess, insbesondere das Walzen bedingt ist. Vorzugweise handelt es sich bei dem Element nämlich um ein Stahlband welches im Querschnitt leicht U-förmige Gestalt besitzt. Derartige bistabile Elemente werden beispielsweise in sogenannten "Klackarmbändern", die auch als "Schnapparmband" oder "Schlagarmband" bezeichnet werden, eingesetzt. Dabei handelt es sich um Armbänder aus Metall, die sich beim Anschlagen an den Arm um diesen wickeln. Die Bänder bleiben in dieser umschlungenen Lage, bis sie wieder gestreckt werden. Solche Klackarmbänder werden häufig mit Reflektorfolien versehen und dienen so als Schutz in der Dunkelheit. Derartige bombierte Federstahlbänder sind besonders robust und einfach zu handhaben.

Das bistabile Element ist in dem zweiten stabilen Zustand insbesondere vollständig zusammengerollt. Dies bedeutet, dass das bistabile Element in diesem zweiten stabilen Zustand einen vorgegebenen Innendurchmesser einnimmt und das gesamte Element spiralförmig zusammengerollt ist. Entweder ist der vorgegebene Innendurchmesser durch die innere Struktur des bistabilen Elements gegeben oder durch ein Objekt, um das sich das bistabile Element wickelt. Da es in der Regel sehr flach ist, liegt der Außendurchmesser des zusammengerollten Elements nur geringfügig über dem Innendurchmesser. Somit ergibt sich ein sehr kompakter Zustand der Beleuchtungsvorrichtung in dem zweiten stabilen Zustand des bistabilen Elements. Beispielsweise stehen von dem aufgerollten Element lediglich das Leuchtelement und das Halteelement ab. Aufgrund der zwei stabilen Zustände ergeben sich für die Beleuchtungsvorrichtung komfortable Einsatzmöglichkeiten. Im ersten stabilen Zustand, wenn das bistabile Element gestreckt ist, kann die Beleuchtungsvorrichtung an dem Halteelement gehalten beziehungsweise aufgestellt werden und so zur allgemeinen Beleuchtung (z.B. Schminkbeleuchtung) verwendet werden. Im zweiten stabilen Zustand, wenn das bistabile Element zusammengerollt ist, ist die Beleuchtungsvorrichtung sehr kompakt und kann so komfortabel transportiert werden. In einem instabilen Zustand zwischen dem ersten und zweiten stabilen Zustand versucht das Element in der Regel den zweiten stabilen Zustand, d.h. den zusammengerollten Zustand, zu erreichen. Dies geschieht mittels Federkraft.

Die Federkraft lässt sich dazu ausnutzen, zwischen die Endabschnitte des bistabilen Elements und insbesondere zwischen das Leuchtelement und das Halteelement einen Gegenstand und insbesondere ein Mobilgerät (z.B. Smartphone) einzuklemmen. Dabei können die Außendimensionen des Mobilgeräts in weiten Bereichen schwanken, ohne dass dies die Funktionalität des Einklemmens zwischen Leuchtelement und Halteelement beeinflussen würde. Bei geeigneter Längsdimensionierung des bistabilen Elements kann beispielsweise annähernd jedes Smartphone zwischen Leuchtelement und Halteelement derart eingeklemmt werden, dass die gesamte Beleuchtungsvorrichtung an dem Smartphone hält.

Die bistabile Beleuchtungsvorrichtung mit einem derartigen bistabilen Element kann also nur zwei stabile Zustände einnehmen. Von jedem anderen Zustand bewegt sich das Element, wenn es nicht gehemmt wird, selbständig in denjenigen stabilen Zustand dieser beiden stabilen Zustände, der ohne Energiezunahme erreichbar ist. In einer Ausgestaltung besitzt das Halteelement ebenfalls eine Leuchtfunktion, insbesondere die gleiche wie das Leuchtelement. Es sind also beispielsweise das Leuchtelement und das Halteelement nahezu identisch ausgebildet (abgesehen z.B. von Elektronikbauteilen). Damit besitzen sowohl Halteelement als auch Leuchtelement eine Leuchtfunktionalität sowie eine Haltefunktionalität.

Weiterhin kann vorgesehen sein, dass ein zweites bistabiles Element (insbesondere Bandelement), das gleich ausgebildet ist wie das erste bistabile Element (insbesondere Bandelement), parallel zu dem ersten bistabilen Element angeordnet ist, und das Leuchtelement an dem ersten Endabschnitt des zweiten bistabilen Elements und das Halteelement an einem dem ersten gegenüberliegenden zweiten Endabschnitt des zweiten bistabilen Elements befestigt sind. Durch die zwei Elemente kann die Beleuchtungsvorrichtung noch stabiler an dem Mobilgerät gehalten werden als die Beleuchtungsvorrichtung mit nur einem Element. Grund hierfür ist unter anderem, dass sich durch das zweite bistabile Element die Haltekraft praktisch verdoppelt.

Zudem kann vorgesehen sein, dass das Halteelement und das Leuchtelement jeweils zylinderförmig ausgebildet sind und ihre Längsachsen parallel zu einer Rollachse des ersten bistabilen Elements in dem zweiten stabilen Zustand ausgebildet sind. Dabei könnten Halteelement und Leuchtelement jeweils beispielsweise eine Länge von 12 bis 15 Zentimeter aufweisen, sodass sie etwa so lange sind wie Smartphones. Der Durchmesser des Halteelements und des Leuchtelements könnten dann etwa im Bereich von 5 bis 10 Millimeter liegen, was etwa der Dicke eines Smartphones entspricht. Eine derartige zylinderförmige Gestalt der beiden Elemente hätte den Vorteil, dass sich die Elemente sehr gut an das Mobilgerät anschmiegen, wenn die Beleuchtungsvorrichtung an das Mobilgerät geklemmt ist beziehungsweise sich selbst dort hält. Darüber hinaus hat diese zylinderförmige Gestalt der beiden Elemente den Vorteil, dass die gesamte Beleuchtungsvorrichtung in dem zweiten stabilen Zustand des Elements eine kompakte Gestalt einnehmen kann, was sich günstig auf die Transportfähigkeit auswirkt.

Gemäß einer weiteren Ausgestaltung weist das Halteelement und/oder das Leuchtelement eine Batterie oder einen Akku auf. So kann beispielsweise das Halteelement die Energie für das Leuchtelement liefern. Andernfalls, wenn auch das Halteelement Leuchtfunktionalität besitzt, kann das Halteelement sowohl für sich selbst als auch für das Leuchtelement Energie liefern. Alternativ, wenn sowohl in dem Halteelement als auch in dem Leuchtelement eine Batterie oder ein Akku vorgesehen sind, kann jedes Element sich selbst mit Energie versorgen.

In einer weiteren Ausführungsform weist das Halteelement oder das Leuchtelement eine Steuereinrichtung zum Steuern einer Leuchtfunktion des Halteelements und/oder des Leuchtelements auf. Eine derartige Steuereinrichtung kann beispielsweise einen Schalter oder eine Ladeanzeige aufweisen. Darüber hinaus kann die Steuereinrichtung aber auch eine Ladeelektronik, eine Wandlerelektronik und dergleichen aufweisen. In der Regel ist es vorteilhaft, wenn für beide Elemente eine gemeinsame Steuereinrichtung vorhanden ist. Dies schließt jedoch nicht aus, dass sowohl das Halteelement als auch das Leuchtelement eine eigene Steuereinrichtung, z.B. einen eigenen Schalter oder Dimmer besitzt.

Des Weiteren kann vorgesehen sein, dass das Leuchtelement eine oder mehrere Leuchtdioden aufweist. Falls nur eine Leuchtdiode vorgesehen ist, kann das Licht über Lichtleiter verteilt werden. So kann beispielsweise an einem Ende des Leuchtelements die Leuchtdiode angeordnet sein und der Lichtleiter längs des Leuchtelements verlaufen und dort gleichförmig Licht abstrahlen. Ähnliches gilt für das Halteelement, wenn die entsprechende Leuchtfunktion vorgesehen ist. Im Falle mehrerer Leuchtdioden können diese längs des Leuchtelements beziehungsweise Halteelements verteilt sein. Die mehreren Leuchtdioden können gemeinsam oder unabhängig voneinander angesteuert sein. Bei unabhängig angesteuerten Leuchtdioden kann die Beleuchtungsstärke der Beleuchtungsvorrichtung entsprechend unterschiedlich variiert werden.

Gemäß einer weiteren Ausführungsform kann das Leuchtelement und/oder das Halteelement teleskopartig ausziehbar sein, insbesondere beidseitig. Auf diese Weise kann die körperliche Ausdehnung der Beleuchtungsvorrichtung insbesondere zum Zwecke des Transports reduziert werden. Beispielsweise besitzt das Leuchtelement drei Teleskopelemente wobei nur das mittlere an dem ersten und/oder zweiten bistabilen Element befestigt ist. Die beiden äußeren Teleskopelemente sind dann z.B. in das mittlere Teleskopelement einschiebbar. Gegebenenfalls besitzen nur die äußeren Teleskopelemente Leuchtfunktionalität, oder aber alle drei Teleskopelemente können leuchten. Alternativ kann das Leuchtelement natürlich auch nur zwei Teleskopelemente oder auch mehr als drei Teleskopelemente aufweisen.

Gemäß der bevorzugten Ausführungsform sind das Leuchtelement und/oder das Halteelement jeweils mit einem elastischen Federelement an dem jeweiligen Ende des ersten bistabilen Elements befestigt, wobei die Beleuchtungsvorrichtung mit dem ersten bistabilen Element in seinem ersten stabilen Zustand und den Federelementen in ihrem entspannten Zustand im Querschnitt eine klammerartige Gestalt besitzt. Unter Umständen ist es von der Stabilität her günstiger, wenn das Halteelement und/oder Leuchtelement an dem jeweiligen Endabschnitt des bistabilen Elements mit dem zusätzlichen Federelement befestigt ist. Durch das zusätzliche Federelement besteht ein zusätzlicher Freiheitsgrad hinsichtlich der Kräfte, die die Beleuchtungsvorrichtung auf das Mobilgerät ausüben kann, um eine stabile Haltewirkung zu erzielen. Durch die spezielle klammerartige Gestalt, die mit den Federelementen erreicht werden kann, kann insbesondere der Rand eines Mobilgeräts besser umfasst werden. Dies kann die Haltestabilität deutlich erhöhen.

Entsprechend einer weiteren Ausgestaltung ist vorgesehen, dass mindestens eines von dem Leuchtelement und dem Halteelement wasserdicht ist und ein Gasvolumen einschließt. Durch diese Ausgestaltung ist es möglich, dass die Beleuchtungsvorrichtung als Schwimmer dient. Befestigt an dem Mobilgerät kann sie so dafür sorgen, dass das Mobilgerät im Wasser nicht untergeht.

Wie oben bereits angedeutet wurde, wird entsprechend der vorliegenden Erfindung auch eine Geräteanordnung mit einem Mobilgerät (insbesondere Smartphone) und eine Beleuchtungsvorrichtung der oben genannten Art bereitgestellt. Bei dieser Anordnung befindet sich das erste bistabile Element weder in dem ersten noch in dem zweiten stabilen Zustand und das erste bistabile Element drückt dabei das Halteelement an eine erste Seite des Mobilgeräts und das Leuchtelement an eine der ersten Seite gegenüberliegende zweite Seite des Mobilgeräts, sodass die Beleuchtungsvorrichtung an dem Mobilgerät festgehalten ist. Insbesondere drückt das bistabile Element das Leuchtelement und das Halteelement an die jeweiligen Schmalseiten des Mobilgeräts beziehungsweise an die Ränder dieser Schmalseiten. Durch die Federkraft des mindestens einen bistabilen Elements ergibt sich eine Haltekraft für die Beleuchtungsvorrichtung, die sie an dem Mobilgerät hält. Vorzugweise besitzt die Beleuchtungsvorrichtung z.B. gummiförmige Reibelemente, damit die Reibung am Mobilgerät entsprechend erhöht ist. Dazu können Halteelement und Leuchtelement ganz oder teilweise aus entsprechenden Materialien mit hoher Reibungskoeffizienten gefertigt sein.

Vorzugsweise handelt es sich bei dem Mobilgerät um ein Smartphone, ein Tablet oder ein Laptop. Mit der Beleuchtungsvorrichtung kann dann erreicht werden, dass das jeweilige Mobilgerät über ausreichende Leuchtmittel verfügt, um hochqualitative Aufnahmen wie Selfies zu machen.

Eine alternative Geräteanordnung weist eine Beleuchtungsvorrichtung der oben genannten Art und eine separate Haltevorrichtung auf. Dabei ist das erste bistabile Element in dem ersten stabilen Zustand in die Haltevorrichtung gesteckt und wird dort so gehalten, dass das Leuchtelement im Wesentlichen senkrecht über dem Halteelement steht. Ist das Halteelement beispielsweise zylinderförmig, so kann die Haltevorrichtung eine entsprechende Nut aufweisen, um das Haltelement aufzunehmen. Ist die Haltevorrichtung beispielsweise plättchenförmig ausgestaltet, so kann sie als Ständer wirken, in dem die Beleuchtungsvorrichtung steht, wenn das bistabile Element ausgerollt beziehungsweise gerade ist. Die Haltevorrichtung kann beispielsweise einen Spiegel aufweisen, sodass die gesamte Geräteanordnung als Schminkspiegel mit Beleuchtung dienen kann.

Die vorliegende Erfindung wird nun anhand der beigefügten Zeichnungen näher erläutert, in denen zeigen:
Fig. 1 eine Beleuchtungsvorrichtung mit zwei bistabilen Elementen im ausgerollten, stabilen Zustand in einer 3D-Ansicht;
Fig. 2 eine Beleuchtungsvorrichtung in einer Querschnittsansicht im zusammengerollten, stabilen Zustand;
Fig. 3 die Beleuchtungsvorrichtung von Fig. 2 im ausgerollten stabilen Zustand;
Fig. 4 die Beleuchtungsvorrichtung von Fig. 3 im eingeschalteten Zustand;
Fig. 5 die Beleuchtungsvorrichtung der Fig. 2 bis 4 in einem instabilen Zwischenzustand;
Fig. 6 eine abgewandelte Beleuchtungsvorrichtung mit zusätzlichen Federelementen in einem ersten Federzustand;
Fig. 7 die Beleuchtungsvorrichtung von Fig. 6 in einem zweiten, klammerartigen Federzustand;
Fig. 8 eine Beleuchtungsvorrichtung mit einem Leuchtelement und einem Halteelement ohne Leuchtfunktionalität;
Fig. 9 eine Beleuchtungsvorrichtung mit teleskopartigem Leuchtelement in 3D-Ansicht; und
Fig. 10 eine Beleuchtungsvorrichtung mit eingeklemmten Smartphone in 3D-Ansicht.

Die in den nachstehenden Zeichnungen 6 und 7 beschriebene Ausführungsform stellt die bevorzugte Ausführungsform der vorliegenden Erfindung dar. Beleuchtungsvorrichtungen entsprechend der vorliegenden Erfindung können an unterschiedlichsten Objekten befestigt werden. Insbesondere können Sie an Mobilgeräten wie Mobilfunktelefonen (z.B. Smartphones) befestigt werden, um für ausreichende Helligkeit bei Foto-und Videoaufnahmen zu sorgen. Eine derartige Beleuchtungsvorrichtung kann aber auch beispielsweise an einem Schminkspiegel, Autospiegel oder dergleichen befestigt werden, damit sich der Betrachter bei besserer Beleuchtung sehen kann. Darüber hinaus kann die Beleuchtungsvorrichtung aber auch an anderen Objekten befestigt werden, um diese beispielsweise optisch zu markieren. Im Folgenden wird eine Anwendung insbesondere im Zusammenhang mit Smartphones vorgestellt. Diese Anwendung ist jedoch nicht einschränkend zu verstehen.

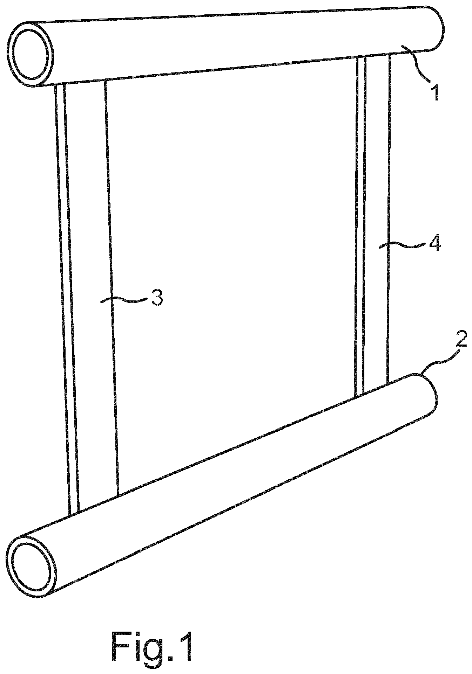

In dem Beispiel von Fig. 1 ist eine Beleuchtungsvorrichtung dargestellt, die ein Leuchtelement 1 und ein Halteelement 2 besitzt. Die beiden Elemente 1 und 2 sind an den Enden zweier bistabile Bandelement 3 und 4 befestigt (nachfolgend werden bistabile Bandelemente stellvertretend für auch andere bistabile Elemente verwendet). Es ergibt sich dadurch ein annähernd rechteckförmiges Gebilde, wobei Leuchtelement 1 und Halteelement 2 zueinander parallel und ebenso die beiden bistabilen Bandelemente 3 und 4 zueinander parallel sind. Das Leuchtelement 1 ist an einem ersten Endabschnitt des ersten bistabilen Bandelements 3 und an einem ersten Endabschnitt des zweiten bistabilen Bandelements 4 befestigt. Ebenso ist das Halteelement 2 an einem zweiten Endabschnitt des ersten bistabilen Bandelements 3, der dem ersten Endabschnitt gegenüberliegt, sowie an einem zweiten Endabschnitt des zweiten bistabilen Bandelements, der dem ersten Endabschnitt gegenüberliegt, befestigt. Es ist nicht notwendig, dass ein jeweiliges Ende eines der Bandelemente 3, 4 mit dem jeweiligen Leuchtelement 1 oder Halteelement 2 bündig ist. Vielmehr kann das Ende eines bistabilen Bandelements 3, 4 auch auf der Seite des Leuchtelements 1, die dem Halteelement 2 abgewandt ist, über das Leuchtelement 1 hinausragen. Gleichermaßen kann auch eines oder beide der Bandelemente 3, 4 an der Seite des Halteelements 2, die dem Leuchtelement 1 abgewandt ist, über das Halteelement 2 hinausragen. Die hinausragenden Enden können beispielsweise für eine bessere Handhabung oder zum weiteren Anklemmen von Objekten genutzt werden.

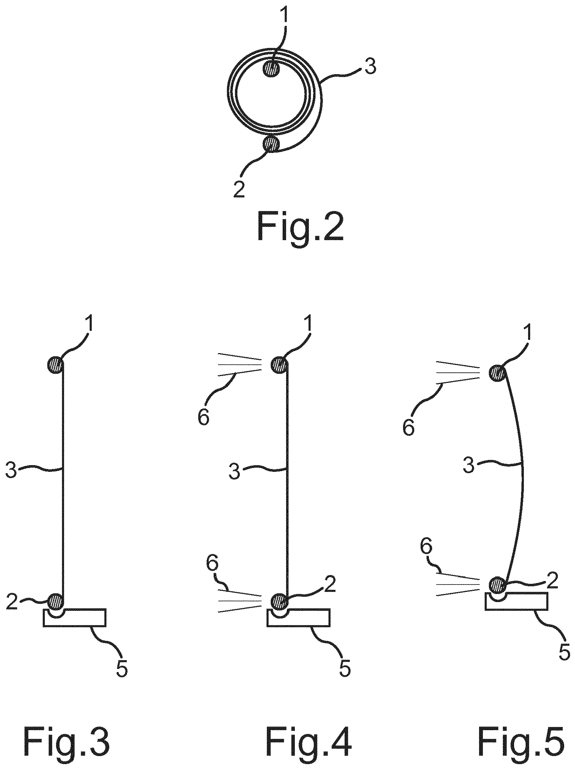

Die bistabilen Bandelemente 3 und 4 sind in Fig. 1 in einem ersten stabilen Zustand, nämlich einem ausgerollten Zustand dargestellt. Die beiden Bandelemente 3 und 4 sind dabei annähernd gerade. Wie im Zusammenhang mit den Fig. 2 bis 5 weiter erläutert werden wird, können die beiden Bandelemente 3 und 4 auch einen zweiten stabilen Zustand und beliebige Zwischenzustände zwischen diesen beiden stabilen Zuständen einnehmen. In jedem anderen Zustand als dem ersten stabilen Zustand sind die beiden Bandelemente gekrümmt.

Das Leuchtelement 1 besitzt eine Leuchtfunktionalität und kann entsprechend Licht abstrahlen. Dazu besitzt es beispielsweise eine oder mehrere Leuchtdioden, welche beispielsweise über eine Steuereinrichtung angesteuert und von einer Batterie beziehungsweise einem Akku gespeist werden. All diese Bauelemente können in einem zylinderfarbigen Gehäuse des Leuchtelements 1 untergebracht sein.

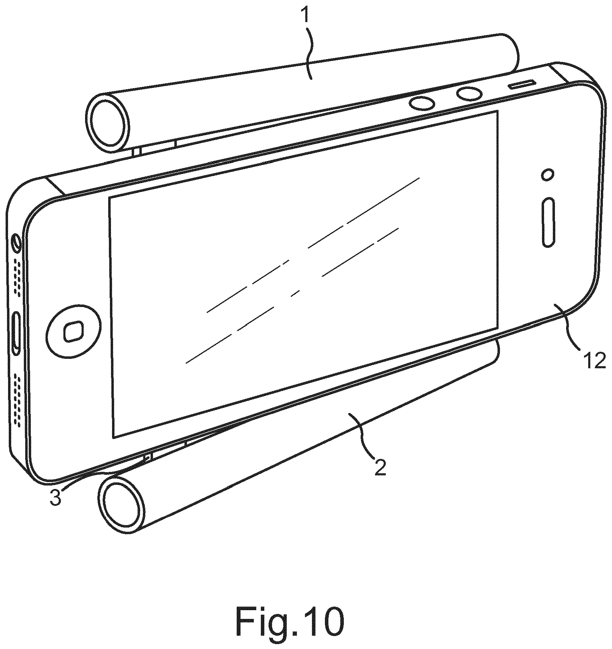

Das Halteelement 2 kann ebenfalls ein zylinderförmiges Gehäuse mit z.B. den gleichen Abmessungen wie das Leuchtelement 1 besitzen. Unter Umständen besitzt es reine Haltefunktionalität, um die gesamte Beleuchtungsvorrichtung beispielsweise an einem Smartphone zu halten (vergleiche Fig. 10).

Die in Fig. 1 dargestellte Beleuchtungsvorrichtung kann in vielerlei Hinsicht variiert werden. So kann beispielsweise auch das Halteelement 2 Leuchtfunktionalität besitzen. Insbesondere kann es die gleiche Leuchtleistung aufweisen wie das Leuchtelement 1. Gegebenenfalls sind auch in dem Halteelement 2 eine Steuerung und ein Energiespeicher vorgesehen. Alternativ kann auch nur in einem der beiden Elemente 1 und 2 ein Energiespeicher und/oder eine Steuerung vorgesehen sein. Gegebenenfalls kann eines der Bandelemente 3, 4 oder beide auch zur Stromleitung dienen, um beispielsweise das Leuchtelement 1 von dem Halteelement 2 aus zu versorgen, oder umgekehrt.

Die Gehäuse von Leuchtelement 1 und Halteelement 2 können auch eine quaderförmigen Gestalt oder eine sonstige Geometrie besitzen. Insbesondere müssen sie nicht entlang ihrer Längsachse gleichförmig sein. Das Material des Gehäuses kann voll transparent oder nur in einem Bereich transparent sein. Auch kann das Gehäuse hinsichtlich seiner Reibung optimiert werden. Hierzu kann beispielsweise zumindest in Teilbereichen des Gehäuses ein gummiartiges Material gewählt werden, um eine erhöhte Reibung an dem Objekt zu erhalten, an dem die Beleuchtungsvorrichtung befestigt werden soll.

In dem Beispiel von Fig. 1 besitzt die Beleuchtungsvorrichtung zwei parallele bistabile Bandelemente 3 und 4. Prinzipiell genügt aber auch ein einziges bistabiles (Band)element, mit dem das Leuchtelement 1 und das Halteelement 2 zusammengehalten werden. Natürlich können auch drei oder mehr bistabile (Band)elemente bei der Beleuchtungsvorrichtung vorgesehen sein. Diese verlaufen vorzugsweise parallel zueinander.

In einer konkreten Ausgestaltung kann sowohl das Leuchtelement 1 als auch das Halteelement 2 mit LED-Streifen bestückt sein und in dem ausgerollten Zustand der Bandelemente 3 und 4 jeweils in die gleiche Richtung abstrahlen. Die Abstrahlrichtung beziehungsweise die Strahlrichtungen können den Bedürfnissen angepasst werden.

In Fig. 2 ist eine Beleuchtungsvorrichtung schematisch in der Seitenansicht dargestellt. Das bistabile Bandelement 3 befindet sich hier im zweiten stabilen Zustand und ist zusammengerollt. Das Leuchtelement 1 und das Halteelement 2 finden sich hier unmittelbar an den Enden des bistabilen Bandelements 3. In dem zweiten stabilen Zustand wickelt sich hier das Bandelement 3 mehrfach um das Leuchtelement 1. Dadurch ergibt sich eine Spirale, an deren innerem Ende das Leuchtelement 1 und an deren äußerem Ende das Halteelement 2 angeordnet ist. Prinzipiell können die Plätze von Leuchtelement 1 und Halteelement 2 natürlich auch vertauscht sein.

Das Bandelement 3 beziehungsweise 4 kann aus Federstahl gewalzt sein und als sogenanntes Schnappband ausgebildet sein. Durch die eingewalzte Wölbung kann das jeweilige Bandelement 3, 4 zwei stabile Zustände einnehmen, nämlich den ausgerollten Zustand gemäß Fig. 1 (erster stabiler Zustand) und den zusammengerollten Zustand gemäß Fig. 2 (zweiter stabiler Zustand). Letzterer wird erreicht, indem die Bandelemente 3, 4 in dem Zustand von Fig. 1 leicht geknickt werden. Das bzw. die bistabilen (Band)elemente können aber auch aus kohlenstofffaserhaltigen, glasfaserhaltigen oder anderen Kunststoffen hergestellt sein.

Die Fig. 3 bis 5 stellen unterschiedliche Zustände der Beleuchtungsvorrichtung von Fig. 2 dar. Wiederum ist eine Seitenansicht gewählt. Das bistabile Element 3 befindet sich in Fig. 3 in dem zweiten stabilen Zustand, d.h. es ist ausgerollt beziehungsweise gestreckt. Leuchtelement 1 und Halteelement 2 sind in diesem Zustand am weitesten voneinander entfernt. Demgegenüber sind in dem zweiten stabilen Zustand des bistabilen Elements 3 das Leuchtelement 1 und das Halteelement 2 sehr nahe beieinander angeordnet. Die Abmessungen der Beleuchtungsvorrichtung bezüglich einer Dimension (Streckrichtung) sind also in dem Zustand von Fig. 2 deutlich kleiner als in dem Zustand von Fig. 3.

Das Halteelement 2 kann beispielsweise in eine Haltevorrichtung 5 beziehungsweise einen Ständer gesteckt werden. Beispielsweise besitzt die Haltevorrichtung 5 eine Aussparung, in die die Haltevorrichtung formschlüssig eingesteckt werden kann. Insbesondere sollte gewährleistet sein, dass die Beleuchtungsvorrichtung in der Haltevorrichtung kippstabil steht. In diesem Zustand kann die Beleuchtungsvorrichtung als einfache, selbst stehende Leuchte verwendet werden.

In Fig. 4 ist die selbst stehende Leuchte von Fig. 3 im eingeschalteten Zustand dargestellt. In dem Beispiel besitzt sowohl das Leuchtelement 1 als auch das - Halteelement 2 Leuchtfunktionalität. Beide strahlen im eingeschalteten Zustand Licht 6 aus. Die beiden Lichtkegel des abgestrahlten Lichts sind hier gleichförmig und gleichgerichtet. Sie können aber auch unterschiedlich ausgebildet sein.

In Fig.4 ist die Beleuchtungsvorrichtung, die auch als "bistabile Lampe" bezeichnet werden kann, zwischen dem ausgerollten und dem zusammengerollten Zustand, d.h. in einem Zwischenzustand zwischen dem ersten und zweiten stabilen Zustand, dargestellt. Dieser an sich instabile Zustand zeichnet sich dadurch aus, dass das bistabile Element 3 durch eigene Federkraft versucht, den zweiten stabilen Zustand gemäß Fig. 2 zu erreichen. Daher würden sich ohne Gegenkraft das Leuchtelement 1 und das Halteelement 2 aufeinander zu bewegen. Wird das bistabile Element also geknickt, so drückte es das Leuchtelement 1 und das Halteelement 2 zueinander. Dies bedeutet, dass die beiden Elemente unterhalb des Maximalabstands gemäß Fig. 3 beliebige kleinere Abstände zueinander einnehmen können und in jedem Zustand werden Leuchtelement 1 und Halteelement 2 aufeinander zu gedrückt. Die Grenze dieser Funktionalität ist erst in einem Abstand der beiden Elemente erreicht, wo sich das bistabile Element um sich selbst entwickelt (Endzustand gemäß Fig. 2). Diese Betriebsart, wonach zwischen dem ersten und zweiten stabilen Zustand Leuchtelement 1 und Halteelement 2 aufeinander zu gedrückt werden ist wichtig für die Anpassung der Beleuchtungsvorrichtung an verschiedene Objektbreiten und insbesondere Smartphone-Breiten. Gibt man beispielsweise ein Smartphone, dessen Gehäusebreite kleiner ist als der maximale Abstand zwischen Leuchtelement 1 und Halteelement 2, zwischen diese beiden Elemente, so hält die erwähnte Zugkraft die Beleuchtungsvorrichtung fest am Gehäuse des Smartphones. Dadurch kann erreicht werden, dass die "bistabile Lampe" an sehr vielen Smartphones befestigt werden kann. Entsprechendes gilt für die "bistabile Lampe" bei Tabletts oder Laptops. Bei einem Laptop kann die "bistabile Lampe" am Bildschirm befestigt werden. In diesem Fall scheint das Licht der "bistabilen Lampe" rechts und links vom Bildschirm und der Benutzer bekommt eine optimale Ausleuchtung für seine Skype- oder Videokonferenz.

Weiterhin könnte der Nutzen der Anordnung dadurch erhöht werden, dass zwischen Leuchtelement 1 und Halteelement 2 noch zusätzlich zu dem beziehungsweise den stabilen Elementen eine Spiegelfolie angebracht wird. Auf diese Weise könnte ein aufrollbarer und beleuchteter Schminkspiegel realisiert werden. Gegebenenfalls könnte auch bei dieser Anordnung das Smartphone eingeklemmt werden, wobei dann eben die Spiegelwirkung nicht genutzt wird.

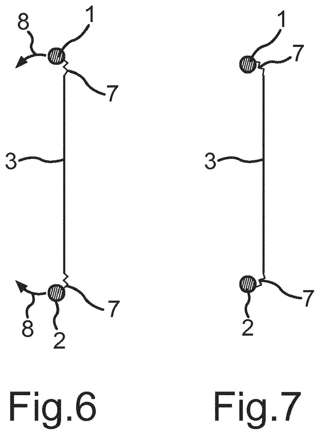

In den Fig. 6 und 7 ist die bevorzugte Ausführungsform einer Beleuchtungsvorrichtung dargestellt. Die Beleuchtungsvorrichtung ist im Wesentlichen so konstruiert wie in Fig. 3. Das Leuchtelement 1 und das Halteelement 2 sind jedoch nicht unmittelbar an einem Endabschnitt des bistabilen Elements 3 befestigt. Vielmehr ist mindestens eines dieser Elemente 1, 2 mittelbar durch ein Federelement 7 am jeweiligen Endabschnitt des bistabilen Elements 3 befestigt. Dieses Federelement 7 ist ein flexibles Teil, welches dafür sorgt, dass die Beleuchtungsvorrichtung noch zuverlässiger an mehrere, unterschiedliche Smartphone-Typen angebracht werden kann. Das Federelement 7 kann aus Gummi gefertigt sein oder aus einem anderen flexiblen oder elastischen Stoff. Durch das Federelement wird der Befestigungsbereich vom Leuchtelement 1 beziehungsweise Halteelement 2 zum bistabilen Element 3 beweglich und kann sich dadurch unterschiedlichen Smartphone-Maßen anpassen. In Fig. 6 sind die Federelemente 7 in einem vorgespannten Zustand dargestellt. Dadurch versuchen das Leuchtelement 1 und das Halteelement 2 sich entsprechend den Pfeilen 8 aufeinander zu zu bewegen. In

Fig. 7 ist die Anordnung von Fig. 6 im entspannten Zustand der Federelemente 7 dargestellt. Die Beleuchtungsvorrichtung besitzt hier eine klammerartige Gestalt, die durch die Federelemente 7 betont ist.

Die bistabilen Elemente können durch eine zusätzliche Maßnahme (z.B. lösbarer Kleber oder Magnetismus) so hergerichtet sein, dass sie am Smartphone wenigstens zeitweise "kleben", d.h. eine kraftschlüssige aber temporäre Befestigung erreicht wird. In einer weiteren Ausgestaltung kann das oder die Leuchtelemente so gestaltet sein, dass sie kleine Haltekrallen besitzen, die einen sicheren Halt am Smartphone gewährleisten.

Prinzipiell könnte (was hier nicht beansprucht wird) eine Beleuchtungsvorrichtung mit den soeben genannten Haltekrallen am Leuchtelement und am Halteelement auch so gestaltet sein, dass anstelle des bistabilen Elements ein oder mehrere Gummibänder verwendet werden. Dann kann zwar nicht die Standlösung gemäß den Fig. 3 und 4 erzielt werden, aber Leuchtelemente 1 und Halteelement 2 könnten durch die Zugwirkung des beziehungsweise der Gummibänder und die Haltekrallen am Smartphone gehalten werden. Diese Lösung verzichtet aber auch auf den zweiten stabilen Zustand gemäß Fig. 2, sodass der Transportzustand der Beleuchtungsvorrichtung weniger "aufgeräumt" wäre.

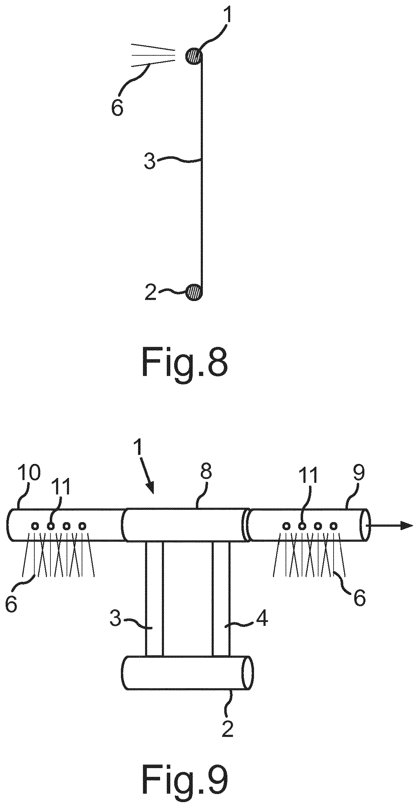

Fig. 8 verdeutlicht nochmals grafisch die einfachste Variante einer Beleuchtungsvorrichtung gemäß der vorliegenden Erfindung. Sie besitzt nur ein einziges Leuchtelement 1, und das Halteelement 2 ist ohne Leuchtfunktionalität ausgestattet. Folglich wird hier nur das Leuchtelement 1 im eingeschalteten Zustand der Beleuchtungsvorrichtung Licht 6 abgeben.

Fig. 9 zeigt eine weitere Ausführungsform einer erfindungsgemäßen Beleuchtungsvorrichtung. Hier ist das Leuchtelement 1 teleskopartig ausgebildet. Aus einem zylinderförmigen Mittelteil 8 des Leuchtelements 1 können an den Stirnseiten jeweils ebenfalls zylinderförmige Seitenelemente 9 und 10 mit etwas vermindertem Durchmesser herausgezogen beziehungsweise herausgefahren werden. Die beiden Seitenteile 9 und 10 besitzen hier beispielhaft mehrere LEDs 11. Diese strahlen im eingeschalteten Zustand entsprechend Licht 6 ab. Es können aber auch andere Lichtquellen in dem Leuchtelement 1 vorgesehen sein. Auch können im Mittelteil 8 Lichtquellen eingebaut sein, obwohl dies in Fig. 9 nicht dargestellt ist. Gegebenenfalls beginnt das Leuchtelement 1 erst dann zu leuchten, wenn eines oder beide Seitenteile 9 ausgefahren sind. Diese Ausführungsform mit Teleskopelementen kann dahingehend variiert werden, dass mehr oder weniger als drei Teleskopelemente verwendet werden. Darüber hinaus kann auch diese Beleuchtungsvorrichtung so variiert werden wie die vorhergehenden Ausführungsbeispiele.

Fig. 10 zeigt eine Geräteanordnung mit einem Mobilgerät und einer Beleuchtungsvorrichtung wie sie oben beschrieben wurde. Bei dem Mobilgerät handelt es sich um eine Smartphone 12. In dem ausgerollten Zustand der bistabilen Elemente 3 beziehungsweise 4 wird das Smartphone zwischen das Leuchtelement 1 und das Halteelement 2 gebracht. Dieser Zustand ist in Fig. 10 dargestellt. Anschließend werden die bistabilen Elemente 3 und 4 etwas eingeknickt, sodass sie den gekrümmten Zustand entsprechend Fig. 5 einnehmen. In diesem Zustand wirkt das Gehäuse des Smartphones 12 der Zugkraft des flexiblen Elements 3 beziehungsweise 4 entgegen, sodass das Leuchtelement 1 und das Halteelement 2 und gegebenenfalls auch die bistabilen Elemente 3, 4 an das Gehäuse des Smartphone 12 geklemmt werden. Die Beleuchtungsvorrichtung kann so für Foto-und Videoaufnahmen mit dem Smartphone 12 genutzt werden. Es ist unmittelbar einleuchtend, dass die Beleuchtungsvorrichtung für unterschiedlich dimensionierte Smartphones oder auch andere Objekte unterschiedlicher Breite genutzt werden kann.

### BEZUGSZEICHENLISTE:

- 1: Leuchtelement
- 2: Halteelement
- 3: Bandelement
- 4: Bandelement
- 5: Haltevorrichtung
- 6: Licht
- 7: Federelement
- 8: Mittelteil
- 9: Seitenelement
- 10: Seitenelement
- 11: LED
- 12: Smartphone

## Patentansprüche

1. Beleuchtungsvorrichtung zur Befestigung an einem Mobilgerät (12) mit
- einem Leuchtelement (1) und
- einem Halteelement (2),
**dadurch gekennzeichnet, dass**
- das Leuchtelement (1) an einem ersten Endabschnitt eines ersten bistabilen Elements (3) und das Halteelement (2) an einem dem ersten gegenüberliegenden zweiten Endabschnitt des ersten bistabilen Elements (3) befestigt sind, wobei
- das erste bistabile Element (3) in einem ersten stabilen Zustand ausgerollt ist, so dass das Leuchtelement (1) von dem Halteelement (2) maximal beabstandet ist,
- das erste bistabile Element (3) in einem zweiten stabilen Zustand zusammengerollt ist und
- die Beleuchtungsvorrichtung durch Federkraft des ersten bistabilen Elements (3) an das Mobilgerät (12) klemmbar ist, wobei
- das Leuchtelement (1) und/oder das Halteelement (2) jeweils mit einem elastischen Federelement (7) an dem jeweiligen Endabschnitt des ersten bistabilen Elements (3) befestigt sind, wobei die Beleuchtungsvorrichtung mit dem ersten bistabilen Element (3) in seinem ersten stabilen Zustand und den Federelementen (7) in ihrem entspannten Zustand im Querschnitt eine klammerartige Gestalt besitzt.

2. Beleuchtungsvorrichtung nach Anspruch 1, wobei das Halteelement (2) ebenfalls eine Leuchtfunktion besitzt, insbesondere die gleiche wie das Leuchtelement (1).

3. Beleuchtungsvorrichtung nach Anspruch 1 oder 2, wobei ein zweites bistabiles Element (4), das gleich ausgebildet ist wie das erste bistabile Element (3), parallel zu dem ersten bistabilen Element (3) angeordnet ist, und das Leuchtelement (1) an einem ersten Endabschnitt des zweiten bistabilen Elements (4) und das Halteelement (2) an einem dem ersten gegenüberliegenden zweiten Endabschnitt des zweiten bistabilen Elements (4) befestigt sind.

4. Beleuchtungsvorrichtung nach einem der vorhergehenden Ansprüche, wobei das Halteelement (2) und das Leuchtelement (1) jeweils zylinderförmig ausgebildet sind und ihre Längsachsen parallel zu einer Rollachse des ersten bistabilen Elements (3) in dem zweiten stabilen Zustand ausgebildet sind.

5. Beleuchtungsvorrichtung nach einem der vorhergehenden Ansprüche, wobei das Halteelement (2) und/oder das Leuchtelement (1) eine Batterie oder einen Akku aufweisen.

6. Beleuchtungsvorrichtung nach einem der vorhergehenden Ansprüche, wobei das Halteelement (2) oder das Leuchtelement (1) eine Steuereinrichtung zum Steuern einer Leuchtfunktion des Halteelements (2) und/oder des Leuchtelements (1) aufweist.

7. Beleuchtungsvorrichtung nach einem der vorhergehenden Ansprüche, bei das Leuchtelement (1) eine oder mehrere Leuchtdioden aufweist.

8. Beleuchtungsvorrichtung nach einem der vorhergehenden Ansprüche, wobei das Leuchtelement (1) teleskopartig ausziehbar ist, insbesondere beidseitig.

9. Beleuchtungsvorrichtung nach einem der vorhergehenden Ansprüche, wobei mindestens eines von dem Leuchtelement (1) und dem Halteelement (2) wasserdicht ist und ein Gasvolumen einschließt.

10. Beleuchtungsvorrichtung nach Anspruch 3, wobei das erste und/oder zweite bistabile Element (3, 4) bandförmig, folienförmig oder tuchförmig ausgebildet ist.

11. Geräteanordnung mit einem Mobilgerät (12) und einer Beleuchtungsvorrichtung nach einem der vorhergehenden Ansprüche, wobei sich das erste bistabile Element (3) weder in dem ersten noch in dem zweiten stabilen Zustand befindet und dabei das erste bistabile Element (3) das Halteelement (2) an eine erste Seite des Mobilgeräts (12) und das Leuchtelement (1) an eine der ersten Seite gegenüberliegende zweite Seite des Mobilgeräts (12) drückt, so dass die Beleuchtungsvorrichtung an dem Mobilgerät (12) fest gehalten ist.

12. Geräteanordnung nach Anspruch 11, wobei das Mobilgerät (12) ein Smartphone, ein Tablet oder ein Laptop ist.

13. Geräteanordnung mit einer Haltevorrichtung (5) und einer Beleuchtungsvorrichtung nach einem der Ansprüche 1 bis 10, wobei das erste bistabile Element (3) in dem ersten stabilen Zustand in die Haltevorrichtung (5) gesteckt ist und dort so gehalten wird, dass das Leuchtelement (1) im Wesentlichen senkrecht über dem Halteelement (2) steht.

## Claims

1. A lighting device for fixing to a mobile apparatus (12) comprising
- a luminous element (1) and
- a retaining element (2),
**characterized in that**
- the luminous element (1) is fixed to a first end section of a first bistable element (3) and the retaining element (2) is fixed to a second end section of the first bistable element (3) opposing the first one, wherein
- the first bistable element (3) is rolled out in a first stable state such that the luminous element (1) is maximally spaced from the retaining element (2),
- the first bistable element (3) is rolled up in a second stable state, and
- the lighting device is clampable to the mobile apparatus (12) by spring force of the first bistable element (3), wherein
- the luminous element (1) and/or the retaining element (2) are each fixed to the respective end section of the first bistable element (3) with an elastic spring element (7), wherein the lighting device has a bracket-like shape in cross-section with the first bistable element (3) in its first stable state and the spring elements (7) in their relaxed state.

2. The lighting device according to claim 1,
wherein the retaining element (2) also has a luminous function, in particular the same as the luminous element (1).

3. The lighting device according to claim 1 or 2,
wherein a second bistable element (4), which is identically formed as the first bistable element (3), is arranged parallel to the first bistable element (3), and the luminous element (1) is fixed to a first end section of the second bistable element (4) and the retaining element (2) is fixed to a second end section of the second bistable element (4) opposing the first one.

4. The lighting device according to any one of the preceding claims,
wherein the retaining element (2) and the luminous element (1) are each cylindrically formed and their longitudinal axes are formed parallel to a roll axis of the first bistable element (3) in the second stable state.

5. The lighting device according to any one of the preceding claims,
wherein the retaining element (2) and/or the luminous element (1) comprise a battery or a storage battery.

6. The lighting device according to any one of the preceding claims,
wherein the retaining element (2) or the luminous element (1) comprises a control device for controlling a luminous function of the retaining element (2) and/or of the luminous element (1).

7. The lighting device according to any one of the preceding claims,
wherein the luminous element (1) comprises one or more light emitting diodes.

8. The lighting device according to any one of the preceding claims,
wherein the luminous element (1) is telescopically extensible, in particular on both sides.

9. The lighting device according to any one of the preceding claims,
wherein at least one of the luminous element (1) and the retaining element (2) is water-proof and encloses a gas volume.

10. The lighting device according to claim 3,
wherein the first and/or the second bistable element (3, 4) are formed band-shaped, foil-shaped or sheet-shaped.

11. An apparatus arrangement with a mobile apparatus (12) and a lighting device according to any one of the preceding claims,
wherein the first bistable element (3) is neither in the first nor in the second stable state and therein the first bistable element (3) presses the retaining element (2) to a first side of the mobile apparatus (12) and the luminous element (1) to a second side of the mobile apparatus (12) opposing the first side, such that the lighting device is fixedly retained on the mobile apparatus (12).

12. The apparatus arrangement according to claim 11,
wherein the mobile apparatus (12) is a smart phone, a tablet or a laptop.

13. An apparatus arrangement with a retaining device (5) and a lighting device according to any one of claims 1 to 10,
wherein the first bistable element (3) is inserted in the retaining device (5) in the first stable state and is retained there such that the luminous element (1) is substantially perpendicular above the retaining element (2).

## Revendications

1. Dispositif d'éclairage destiné à la fixation à un appareil mobile (12), comprenant
- un élément lumineux (1) et
- un élément de maintien (2),
**caractérisé en ce que**
- l'élément lumineux (1) est fixé à une première portion d'extrémité d'un premier élément bistable (3) et l'élément de maintien (2) est fixé à une deuxième portion d'extrémité, à l'opposé de la première, du premier élément bistable (3),
- le premier élément bistable (3), dans un premier état stable, étant déroulé, de sorte que l'élément lumineux (1) est espacé au maximum de l'élément de maintien (2),
- le premier élément bistable (3), dans un deuxième état stable, étant enroulé et
- le dispositif d'éclairage pouvant être calé contre l'appareil mobile (12) par la force de ressort du premier élément bistable (3),
- l'élément lumineux (1) et/ou l'élément de maintien (2) étant respectivement fixés par un élément ressort (7) élastique à la portion d'extrémité respective du premier élément bistable (3), le dispositif d'éclairage possédant, en section transversale, une configuration de type pince avec le premier élément bistable (3) dans son premier état stable et l'élément ressort (7) dans son état détendu.

2. Dispositif d'éclairage selon la revendication 1, l'élément de maintien (2) possédant également une fonction d'éclairage, notamment la même que l'élément lumineux (1).

3. Dispositif d'éclairage selon la revendication 1 ou 2, un deuxième élément bistable (4), qui est de configuration identique à celle du premier élément bistable (3), étant disposé parallèlement au premier élément bistable (3) et l'élément lumineux (1) étant fixé à une première portion d'extrémité du deuxième élément bistable (4) et l'élément de maintien (2) étant fixé à une deuxième portion d'extrémité, à l'opposé de la première, du deuxième élément bistable (4).

4. Dispositif d'éclairage selon l'une des revendications précédentes, l'élément de maintien (2) et l'élément lumineux (1) étant respectivement de configuration cylindrique et leurs axes longitudinaux étant configurés parallèlement à un axe de roulis du premier élément bistable (3) dans le deuxième état stable.

5. Dispositif d'éclairage selon l'une des revendications précédentes, l'élément de maintien (2) et/ou l'élément lumineux (1) possédant une pile ou un accumulateur.

6. Dispositif d'éclairage selon l'une des revendications précédentes, l'élément de maintien (2) ou l'élément lumineux (1) possédant un système de commande destiné à commander une fonction d'éclairage de l'élément de maintien (2) et/ou de l'élément lumineux (1).

7. Dispositif d'éclairage selon l'une des revendications précédentes, l'élément lumineux (1) possédant une ou plusieurs diodes électroluminescentes.

8. Dispositif d'éclairage selon l'une des revendications précédentes, l'élément lumineux (1) étant extractible de manière télescopique, notamment des deux côtés.

9. Dispositif d'éclairage selon l'une des revendications précédentes, au moins l'un parmi l'élément lumineux (1) et l'élément de maintien (2) étant étanche à l'eau et enfermant un volume de gaz.

10. Dispositif d'éclairage selon la revendication 3, le premier et/ou le deuxième élément bistable (3, 4) étant réalisés en forme de bande, en forme de film ou en forme de toile.

11. Arrangement d'appareil comprenant un appareil mobile (12) et un dispositif d'éclairage selon l'une des revendications précédentes, le premier élément bistable (3) ne se trouvant ni dans le premier, ni dans le deuxième état stable et le premier élément bistable (3) poussant alors l'élément de maintien (2) contre un premier côté de l'appareil mobile (12) et l'élément lumineux (1) contre un deuxième côté, à l'opposé du premier, de l'appareil mobile (12), de sorte que le dispositif d'éclairage est fermement maintenu sur l'appareil mobile (12) .

12. Arrangement d'appareil selon la revendication 11, l'appareil mobile (12) étant un Smartphone, une tablette ou un ordinateur portable.

13. Arrangement d'appareil comprenant un dispositif de maintien (5) et un dispositif d'éclairage selon l'une des revendications 1 à 10, le premier élément bistable (3) dans le premier état stable étant inséré dans le dispositif de maintien (5) et y étant maintenu, de sorte que l'élément lumineux (1) se trouve sensiblement perpendiculairement au-dessus de l'élément de maintien (2) .
